# EUROPÄISCHE PATENTSCHRIFT

(11) **EP 1 080 854 B1**
(45) Veröffentlichungstag und Bekanntmachung des Hinweises auf die Patenterteilung: **15.10.2003**
(21) Anmeldenummer: 00116081.1
(22) Anmeldetag: 27.07.2000
(51) Int. Cl.: B27D 5/00, B29C 63/00

(54) **Verfahren zum Befestigen von Deckleisten auf den Schmalseiten von Möbelplatten**
Method for bonding strips on edges of furniture panels
Procédé pour fixer des bandes de recouvrement sur les chants de panneaux de meuble

(30) Priorität: 25.08.1999 DE 19940329
(43) Veröffentlichungstag der Anmeldung: 07.03.2001
(73) Patentinhaber: W. Döllken & Co GmbH, D-45239 Essen (DE)
(72) Erfinder: Meyer zu Drewer, Jens, 40882 Ratingen (DE); Müller, Herbert, Dr.-Ing., 42579 Heiligenhaus-Isenbügel (DE)
(74) Vertreter: Honke, Manfred, Dr.-Ing.

(56) Entgegenhaltungen:
- EP-A- 0 897 781
- WO-A-85/01009
- DD-A- 257 797
- DE-U- 29 903 734

## Beschreibung

Die Erfindung betrifft ein Verfahren zum Befestigen von Deckleisten aus thermoplastischem Kunststoff auf Schmalseiten von Möbelplatten, wonach entweder die Deckleisten unmittelbar auf die Schmalseiten aufgebracht und mit den Schmalseiten in adhäsiven Verbund gebracht werden oder die Deckleisten unter Zwischenschaltung eines dünnflächigen Klebeauftrages mit den Schmalseiten verklebt werden. - Im Rahmen der Erfindung handelt es sich bei den Möbelplatten um Spanplatten, Faserplatten oder dergleichen Holzwerkstoffplatten.

Bei dem Befestigen von Deckleisten auf den Schmalseiten von Möbelplatten besteht ein ständiges Problem darin, dass eine sichtbare Fuge zwischen den Deckleisten und der Möbelplatte bzw. ihren Schmalseiten entsteht. Diese Fuge resultiert aus einer Schmelzkleberschicht und einer Haftvermittlerschicht, weil regelmäßig ein Haftvermittler und ein Schmelzkleber Verwendung finden, um die Deckleisten aus thermoplastischem Kunststoff auf den Schmalseiten von Möbelplatten zu befestigen. Insoweit handelt es sich um eine unansehnliche Klebefuge.

Ein gattungsgemäßes Verfahren wird in der DD 257 797 A1 beschrieben. In diesem Fall wird eine klebstofffreie Verbindung zwischen einem Thermoplastprofil und einer Holzwerkstoffplatte verwirklicht, bei welcher die zu fügende Fläche des Thermoplastprofils kurzzeitig einseitig partiell an der Oberfläche mindestens bis zum Schmelzpunkte erwärmt und sofort anschließend mit Druckflächen an die Fügefläche und folglich Schmalseite der Holzwerkstoffplatte gepresst wird. Die Breite des Thermoplastprofils entspricht der Breite der Holzwerkstoffplatte. Hierdurch versucht man.eine besonders rationelle Herstellung von klebstofffreien Verbindungen aus Thermoplast- und Holzwerkstoffen herstellen zu können.

Nach der DE 299 03 734 U1 wird ein Andruckelement zum Anleimen eines bandförmigen Belages an eine Schmalfläche eines Plattenelementes wie beispielsweise einer Holzwerkstoffplatte beschrieben, wobei man den Belag mit mindestens einem Andruckelement an die Schmalfläche anpresst. Zum Verkleben ist der Belag mit einem Schmelzklebstoff beschichtet. Der bandförmige Belag weist einen beidseitigen Überstand auf und wird nur im Bereich der äußeren Kanten der Schmalfläche stark angepresst. Danach müssen die überstehenden Ränder abgeschnitten werden. Bei dem Andruckelement handelt es sich um einen Gleitschuh, welcher insbesondere über seine gesamte Länge einen linienartigen Andruckbereich aufweist.

Im Übrigen ist es aus WO-A-85 01009 bekannt, bandförmige Deckleisten unter Zwischenschaltung eines dünnflächigen Klebeauftrages mit den Schmalseiten eines Werkstückes zu verkleben. In diesem Fall weisen die Deckleisten offenbar keinen Überstand auf.

Der Erfindung liegt das technische Problem zugrunde, ein Verfahren der eingangs beschriebenen Art so weiter zu entwickeln, dass sich Deckleisten aus thermoplastischem Kunststoff auf den Schmalseiten von Möbelplatten ohne sichtbare Fuge einwandfrei befestigen lassen. Auch soll eine entsprechend gestaltete Möbelplatte geschaffen werden.

Dieses Problem wird erfindungsgemäß durch ein Verfahren gemäß Anspruch 1 oder 3 gelöst.

Zur Lösung dieses technischen Problems schlägt die Erfindung jeweils bei einem gattungsgemäßen Verfahren vor, dass Deckleisten mit beidseitigem Überstand in Bezug auf die jeweiligen Schmalseiten verwendet werden, dass ferner die Überstände zur Fugenversiegelung aufgeschmolzen werden, und dass danach das aufgeschmolzene Deckleistenmaterial unter Erzeugung von mit den Schmalseiten deckungsgleichen Deckleisten entfernt oder verdrückt wird.

Der adhäsive Verbund zwischen den Deckleisten und den Schmalseiten lässt sich unter Berücksichtigung neuer Verbindungstechniken verwirklichen. So ist selbst ein Aufschweißen der Deckleisten auf die Schmalseiten beispielsweise im Wege einer Hochfrequenzschweißung denkbar. Überraschenderweise wird dennoch ein einwandfreier Verbund zwischen den Schmalseiten und den Deckleisten erreicht, zumal im Zuge des Schweißvorganges eine form- und kraftschlüssige Verbindung zwischen den Schmalseiten und den Deckleisten entsteht.

Ein dünnflächiger Klebeauftrag, welcher zwischen den Deckleisten und den Schmalseiten zwischengeschaltet sein kann, bleibt unter Einsatz eines PUR-Hotmelts oder APAO-Hotmelts praktisch unsichtbar. Das gilt insbesondere dann, wenn Deckleisten mit Randverdickungen verwendet werden, so dass die Presskraft in den Fugenrandbereichen stets am stärksten ist. Außerdem empfiehlt sich in solchen Fällen die Verwendung von Deckleisten mit einer leichten Vorspannung. Darüber hinaus lässt sich ein eingefärbter Klebstoff verwenden, der gleichfarbig mit beispielsweise den Deckleisten sein kann. Dadurch wird das Unsichtbarmachen der Klebefuge weiter gefördert. Das gilt auch unter Berücksichtigung des jeweils verwendeten Klebstoffes, bei dem es sich um einen Lösungsmittelkleber oder um einen Schmelzkleber handeln kann, der unter Verzicht auf einen Haftvermittler verwendet wird.

Ferner besteht die Möglichkeit, die Klebefuge mechanisch oder thermisch zu versiegeln. Das gilt im Übrigen auch für die Ausführungsform, wonach die Deckleisten unmittelbar auf die Schmalseiten aufgebracht sind und mit diesen in adhäsivem Verbund stehen. In beiden Fällen empfiehlt die Erfindung, dass die Deckleisten mit dem jeweils beidseitigen Überstand in Bezug auf die jeweiligen Schmalseiten verwendet werden, dass die Überstände zur Fugenversiegelung aufgeschmolzen werden, und dass dann das aufgeschmolzene Deckleistenmaterial unter Erzeugung von mit den Schmalseiten deckungsgleichen Deckleisten entfernt wird, z. B. mittels einer Ziehklinge oder dergleichen. Das zur Fugenversiegelung überstehende Material kann aber auch aufgeschmolzen und/oder verdrückt werden. Bei thermoplastischen Kunststoffen ist auch eine plastische Verformung nur unter Druck darstellbar, so dass man in diesem Bereich ohne zusätzliche Wärmezufuhr auskommt, wodurch eine spätere mechanische Bearbeitung (Inline) verbessert wird.

Im Folgenden wird die Erfindung anhand einer lediglich ein Ausführungsbeispiel darstellenden Zeichnung näher erläutert. Es zeigen:
- Fig. 1: ausschnittsweise und in perspektivischer Darstellung eine unmittelbar auf eine Schmalseite einer Möbelplatte aufgebrachte Deckleiste,
- Fig. 2: einen Ausschnitt aus dem Gegenstand nach Fig. 1 nach Aufschmelzen des Überstandes und
- Fig. 3: den Gegenstand nach Fig. 2 nach dem Entfernen des aufgeschmolzenen Deckleistenmaterials zur Erzeugung einer mit der Schmalseite der betreffenden Möbelplatte deckungsgleichen Deckleiste.

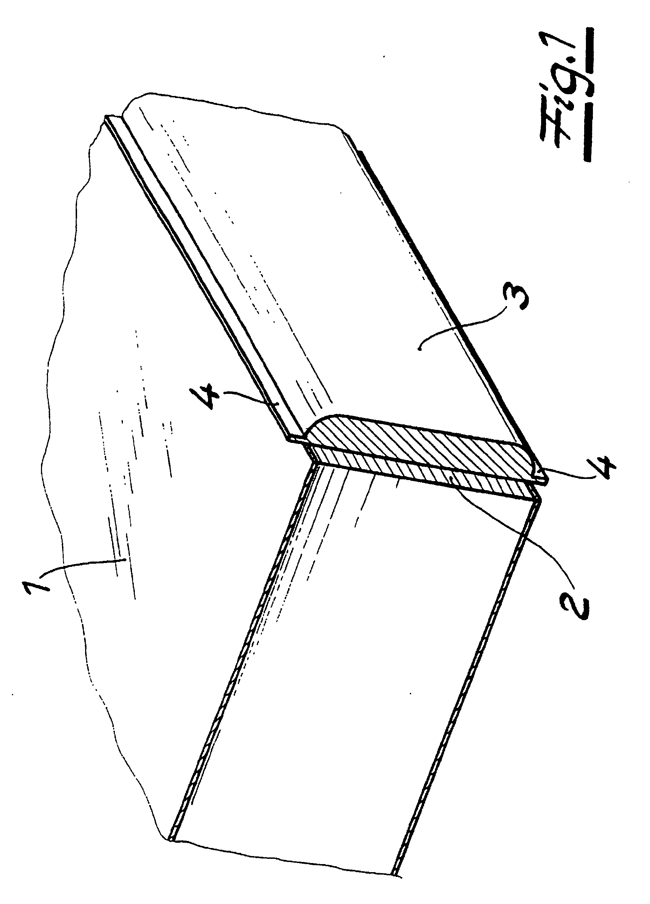

In den Figuren ist eine Möbelplatte 1 in der Ausführungsform einer Spanplatte dargestellt, bei welcher auf eine Schmalseite 2 eine Deckleiste 3 unmittelbar aufgeschweißt ist. Es ist eine Deckleiste 3 mit beidseitigem Überstand 4 in Bezug auf die Schmalseite 2 verwendet worden. Das zeigt Fig. 1.

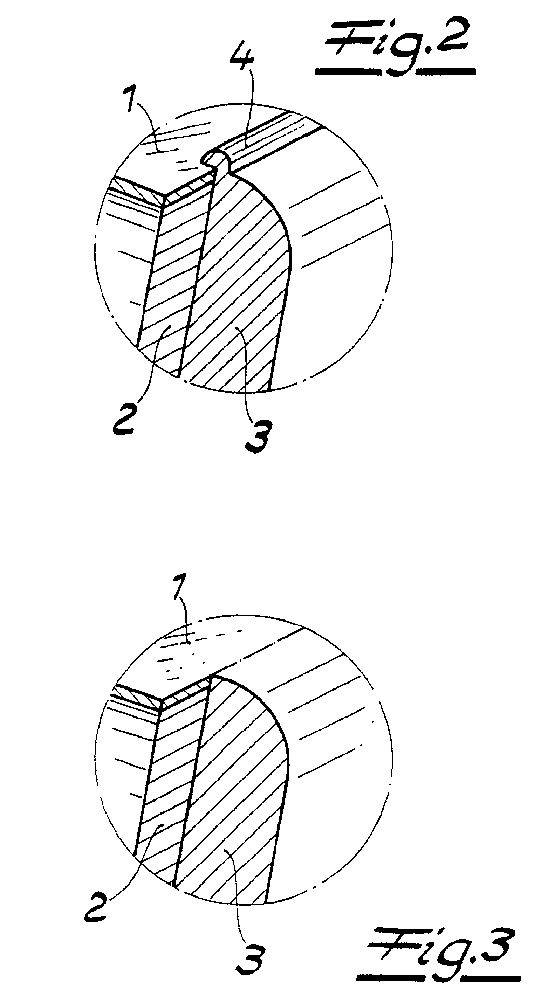

Nach Fig. 2 sind die Überstände 4 zur Fugenversiegelung aufgeschmolzen worden. Nach Fig. 3 ist das aufgeschmolzene Deckleistenmaterial unter Erzeugung einer mit der Schmalseite 2 deckungsgleichen Deckleiste 3 entfernt worden. Im Ergebnis ist dadurch die Fuge zwischen der Deckleiste 3 und der Schmalseite 2 unsichtbar gemacht worden.

## Patentansprüche

1. Verfahren zum Befestigen von Deckleisten (3) aus thermoplastischem Kunststoff auf Schmalseiten (2) von Möbelplatten, wonach die Deckleisten (3) unmittelbar auf die Schmalseiten (2) aufgebracht und mit den Schmalseiten (2) in adhäsiven Verbund gebracht werden,
**dadurch gekennzeichnet, dass**
- Deckleisten (3) mit beidseitigem Überstand (4) in Bezug auf die jeweiligen Schmalseiten (2) verwendet werden, dass ferner
- die Überstände (4) zur Fugenversiegelung aufgeschmolzen werden, und dass
- danach das aufgeschmolzene Deckleistenmaterial unter Erzeugung von mit den Schmalseiten (2) deckungsgleichen Deckleisten (3) entfernt oder verdrückt wird.

2. Verfahren nach Anspruch 1, **dadurch gekennzeichnet, dass** die Deckleisten (3) auf die Schmalseiten (2) aufgeschweißt werden.

3. Verfahren zum Befestigen von Deckleisten (3) aus thermoplastischem Kunststoff auf den Schmalseiten (2) von Möbelplatten, wonach die Deckleisten (3) unter Zwischenschaltung eines dünnflächigen Klebeauftrages mit den Schmalseiten (2) verklebt werden, wonach ferner
die Deckleisten (3) mit beidseitigem Überstand (4) in Bezug auf die jeweiligen Schmalseiten (2) verwendet werden,
**dadurch gekennzeichnet, dass** die Überstände (4) zur Fugenversiegelung aufgeschmolzen werden, und dass
danach das aufgeschmolzene Deckleistenmaterial unter Erzeugung von mit den Schmalseiten (2) deckungsgleichen Deckleisten (3) entfernt oder verdrückt wird.

4. Verfahren nach Anspruch 3, **dadurch gekennzeichnet, dass** Deckleisten (3) mit Randverdickung verwendet werden.

5. Verfahren nach Anspruch 3 oder 4, **dadurch gekennzeichnet, dass** Deckleisten (3) mit einer leichten Vorspannung verwendet werden.

6. Verfahren nach einem der Ansprüche 3 bis 5, **dadurch gekennzeichnet, dass** ein eingefärbter Klebstoff verwendet wird.

7. Verfahren nach einem der Ansprüche 3 bis 6, **dadurch gekennzeichnet, dass** ein Lösungsmittelkleber oder ein Schmelzkleber unter Verzicht auf einen Haftvermittler verwendet wird.

8. Verfahren nach einem der Ansprüche 1 bis 7, **dadurch gekennzeichnet, dass** die Fuge oder Klebefuge mechanisch oder thermisch versiegelt wird.

9. Verfahren nach einem der Ansprüche 1 bis 8, **dadurch gekennzeichnet, dass** es sich bei den Möbelplatten um Spanplatten, Faserplatten oder dergleichen Holzwerkstoffplatten handelt.

10. Möbelplatte (1), mit auf ihre Schmalseiten (2) unmittelbar aufgeschweißten oder unter Verzicht auf einen Haftvermittler aufgeklebten Deckleisten (3) **dadurch gekennzeichnet, dass** sie durch ein Verfahren gemäß einem des Ansprüche 1 bis 9 erhältlich ist.

## Claims

1. A method of fixing cover strips (3) made of thermoplastic plastics material to the edges (2) of furniture panels, according to which the cover strips (3) are applied directly to the edges (2) and are brought into adhesive bonding with the edges (2),
**characterised in that**
- cover strips (3) are used which have an overhang (4) on both sides in relation to the respective edges (2), that in addition
- the overhangs (4 ) are fused in order to seal the joints, and that
- thereafter the fused cover strip material is removed or squashed to produce cover strips (3) which are coincident with the edges (2).

2. A method according to claim 1, **characterised in that** the cover strips (3) are welded to the edges (2).

3. A method of fixing cover strips (3) made of thermoplastic plastics material to the edges (2) of furniture panels, according to which the cover strips (3) are adhesively bonded to the edges (2) with a thin layer of adhesive applied therebetween, according to which in addition
cover strips (3) are used which have an overhang (4) on both sides in relation to the respective edges (2),
**characterised in that** the overhangs (4 ) are fused in order to seal the joints, and that
thereafter the fused cover strip material is removed or squashed to produce cover strips (3) which are coincident with the edges (2).

4. A method according to claim 3, **characterised in that** cover strips (3) are used which are thickened at their edges.

5. A method according to claim 3 or 4, **characterised in that** cover strips (3) are used which are under a slight prestress.

6. A method according to any one of claims 3 to 5, **characterised in that** a coloured adhesive is used.

7. A method according to any one of claims 3 to 6, **characterised in that** a solvent-based adhesive or a hot melt adhesive is used, with a bonding agent being dispensed with.

8. A method according to any one of claims 1 to 7, **characterised in that** the joint or adhesive joint is mechanically or thermally sealed.

9. A method according to any one of claims 1 to 8, **characterised in that** the furniture panels are particle boards, fibre boards or similar timber product boards.

10. A furniture panel (1) having cover strips (3) which are directly welded to its edges (2) or which are adhesively bonded thereto with a bonding agent being dispensed with, **characterised in that** it can be obtained by a method according to any one of claims 1 to 9.

## Revendications

1. Procédé de fixation de bandes de recouvrement (3) en matière thermoplastique sur les chants (2) de panneaux de meuble, dans lequel les bandes de recouvrement (3) sont appliquées directement sur les chants (2) et amenées en liaison par adhérence avec les chants (2),
**caractérisé en ce que**
- les bandes de recouvrement (3) sont utilisées avec débordement (4) des deux côtés par rapport aux chants (2) respectifs, **en ce qu'**en outre
- les débordements (4) sont fondus pour sceller les joints, et **en ce que**
- ensuite, la matière fondue des bandes de recouvrement est éliminée ou comprimée en produisant des bandes de recouvrement (3) coïncidant avec les chants (2).

2. Procédé selon la revendication 1, **caractérisé en ce que** les bandes de recouvrement (3) sont soudées sur les chants (2) .

3. Procédé de fixation de bandes de recouvrement (3) en matière thermoplastique sur les chants (2) de panneaux de meuble, dans lequel les bandes de recouvrement (3) sont collées avec les chants (2) avec interposition d'une mince couche de colle, dans lequel en outre
les bandes de recouvrement (3) sont utilisées avec un débordement (4) des deux côtés par rapport aux chants (2) respectifs,
**caractérisé en ce que** les débordements (4) sont fondus pour sceller les joints, et **en ce que**
ensuite, la matière fondue des bandes de recouvrement est éliminée ou comprimée en produisant des bandes de recouvrement (3) coïncidant avec les chants (2).

4. Procédé selon la revendication 3, **caractérisé en ce qu'**on utilise des bandes de recouvrement (3) avec surépaisseur sur les bords.

5. Procédé selon là revendication 3 ou 4, **caractérisé en ce qu'**on utilise des bandes de recouvrement (3) avec une légère précontrainte.

6. Procédé selon l'une des revendications 3 à 5, **caractérisé en ce qu'**on utilise une colle teintée.

7. Procédé selon l'une des revendications 3 à 6, **caractérisé en ce qu'**on utilise une colle à solvant ou une colle thermofusible en renonçant à un agent adhésif.

8. Procédé selon l'une des revendications 1 à 7, **caractérisé en ce que** le joint ou le joint collé est scellé mécaniquement ou thermiquement.

9. Procédé selon l'une des revendications 1 à 8, **caractérisé en ce que** les panneaux de meuble sont des panneaux d'aggloméré, des panneaux de fibres ou des panneaux similaires de dérivés du bois.

10. Panneau de meuble (1) avec des bandes de recouvrement (3) soudées directement sur ses chants (2) ou collées en renonçant à un agent adhésif, **caractérisé en ce qu'**il peut-être obtenu par un procédé selon l'une des revendications 1 à 9.
